# EUROPÄISCHE PATENTSCHRIFT

(11) **EP 0 249 082 B1**
(45) Veröffentlichungstag und Bekanntmachung des Hinweises auf die Patenterteilung: **08.09.1993**
(21) Anmeldenummer: 87107615.4
(22) Anmeldetag: 25.05.1987
(51) Int. Cl.: C08L 69/00

(54) **Verwendung eines Kunststoffs zur Herstellung von Tastenkappen von Tastaturen insbesondere für die Datentechnik**
Use of plastic material for the production of key caps for keyboards, especially for data processing
Utilisation d'une matière plastique pour la production de capuchons de touches pour claviers, en particulier pour l'informatique

(30) Priorität: 11.06.1986 DE 3619670
(43) Veröffentlichungstag der Anmeldung: 16.12.1987
(73) Patentinhaber: SIEMENS AKTIENGESELLSCHAFT, 80333 München (DE)
(72) Erfinder: Sailer, Konrad, D-8901 Kissing (DE)

(56) Entgegenhaltungen:
- DE-A- 3 247 927
- FR-A- 2 356 697
- FR-A- 2 369 320
- GB-A- 2 120 169
- JAPANESE PATENT GAZETTE, Sektion Chemistry, Woche 8705, 27. März 1987; & JP-A-61 287 741
- CHEMICAL ABSTRACTS, Band 79, Nr. 13, 31. Dezember 1973, Seite 20, Zusammenfassung Nr. 147128n

## Beschreibung

Die Erfindung betrifft die Verwendung eines Kunststoffes aus einer Polycarbonatmischung mit 10 - 50 % aromatischem Polyester zur Herstellung von mit Laserstrahlen beschriftbaren Kunststoffteilen.

Kunststoffteile oder Tastenkappen für Tastaturen bei Dateneinrichtungen werden derzeit mit Hilfe eines Zweifarbenspritzgußverfahrens bzw. eines Druckverfahrens beschriftet. Aus der DD 231 161 ist bekannt, Kunststoffe, wie z.B. Kantschuk und PVC, zur Laserbeschriftung zu verwenden.

Aufgabe der vorliegenden Erfindung ist die Verwendung weiterer Kunststoffmassen zur Herstellung von mit Laserstrahlen beschriftbaren Kunststoffteilen, z.B. Tastaturkappen.

Zur Lösung dieser Aufgabe wird der Kunststoff derart zusammengesetzt, daß Polycarbonat mit 10 - 50 % aromatischem Polyester vermischt wird, welcher ein ein Kondensat aus Bisphenol-A, Terephthalsäure und Butylenglykol ist.

Durch diese Maßnahme erhält man einen Kunststoff, der je nach Mischungsverhältnis Kontrastverhältnisse von 4 - 8 : 1 liefert. Dadurch ist es möglich, Tastenbeschriftungen mit Hilfe von Laserstrahlen vorzunehmen. Dies bewirkt eine Reduzierung der Typenvielfalt in der Montage, eine Senkung der Lagerkosten und Lagerkapazität sowie eine Vereinheitlichung der Montagelinie in der Fertigung derartiger mit Tasten bestückter Geräte. Die Werkzeugvielfalt kann reduziert werden und die Fertigungskosten werden da gegenüber einem Druckverfahren erheblich gesenkt. Gleichzeitig wird die Wärmebeständigkeit des Polycarbonats erhöht und die Spannungsrißempfindlichkeit des so erhaltenen Materials gegenüber einfachen Polycarbonaten abgesenkt.

Die Mischung nach der Erfindung ist im gleichen Temperaturbereich wie Polycarbonat verarbeitbar, d.h. in einem Bereich von 260° - 300° C.

## Patentansprüche

1. Verwendung eines Kunststoffes aus Polycarbonat, welches mit 10 - 50 % aromatischem Polyester vermischt ist, zur Herstellung von mit Laserstrahlen beschriftbaren Kunststoffteilen, **dadurch gekennzeichnet,** daß als aromatischer Polyester ein Kondensat aus Bisphenol-A, Terephthalsäure und Butylenglykol verwendet wird.

2. Verwendung eines Kunststoffes nach Anspruch 1, **dadurch gekennzeichnet,** daß die mit Laserstrahl beschriftbaren Kunststoffteile Tastaturkappen sind.

## Claims

1. Use of a plastic comprising polycarbonate which is mixed with 10-50 % of aromatic polyester to produce plastics parts which can be inscribed using laser beams, characterised in that the aromatic polyester used is a condensate of bisphenol A, terephthalic acid and butylene glycol.

2. Use of a plastic according to Claim 1, characterised in that the plastics parts which can be inscribed using a laser beam are keyboard caps.

## Revendications

1. Utilisation d'une matière plastique en polycarbonate, qui est mélangée à 10 à 50 % d'un polyester aromatique, pour fabriquer des pièces en matière plastique, sur lesquelles on peut écrire par un rayonnement laser, caractérisée en ce qu'elle consiste à utiliser comme polyester aromatique un produit condensé de bisphénol A, d'acide téréphtalique et de butylèneglycol.

2. Utilisation d'une matière plastique suivant la revendication 1, caractérisée en ce que les pièces en matière plastiques, sur lesquelles on peut écrire par un rayonnement laser, sont des capuchons de touches de claviers.
